(19) Europäisches Patentamt
European Patent Office
Office européen des brevets

(11) Veröffentlichungsnummer : **0 056 243**
**B1**

(12) # EUROPÄISCHE PATENTSCHRIFT

(45) Veröffentlichungstag der Patentschrift : **28.08.85**

(51) Int. Cl.⁴ : **C 08 L 67/02**, C 08 L 55/02

(21) Anmeldenummer : **82100044.5**

(22) Anmeldetag : **07.01.82**

(54) **Hochschlagzähe Polyalkylenterephthalate.**

(30) Priorität : **14.01.81 DE 3100902**

(43) Veröffentlichungstag der Anmeldung : **21.07.82 Patentblatt 82/29**

(45) Bekanntmachung des Hinweises auf die Patenterteilung : **28.08.85 Patentblatt 85/35**

(84) Benannte Vertragsstaaten : **DE FR GB IT**

(56) Entgegenhaltungen :
**EP-A- 0 022 216**
**DE-A- 2 348 377**
**DE-A- 2 636 135**
**DE-A- 3 004 942**
**"Ullmann's Encyklopädie der technischen Chemie", 4. Aufl. Bd. 19, S. 280**

(73) Patentinhaber : **BAYER AG**
**Konzernverwaltung RP Patentabteilung**
**D-5090 Leverkusen 1 Bayerwerk (DE)**

(72) Erfinder : **Binsack, Rudolf, Dr.**
**Bethelstrasse 4a**
**D-4150 Krefeld 1 (DE)**
Erfinder : **Rempel, Dieter, Dr.**
**Max-Beckmann-Strasse 35**
**D-5090 Leverkusen (DE)**
Erfinder : **Bier, Peter, Dr.**
**Bodelschwinghstrasse 18**
**D-4150 Krefeld 1 (DE)**
Erfinder : **Lindner, Christian, Dr.**
**Riehler Strasse 200**
**D-5000 Köln 60 (DE)**

**EP 0 056 243 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft hochschlagzähe Mischungen aus Polyalkylenterephthalaten und ABS-Pfropfpolymerisat bestimmter Zusammensetzung und eng definierter Teilchengrößse.

Polyalkylenterephthalate haben auf dem Gebiet der thermoplastischen Formmassen wegen ihrer wertvollen technologischen Eigenschaften, wie z. B. Steifigkeit, Härte, Abriebfestigkeit, dynamische und thermische Belastbarkeit, schnelle Verarbeitbarkeit, große Bedeutung erlangt. Ein Nachteil dieser Formmassen ist ihre nicht immer ausreichende mehraxiale (zweidimensionale) Schlagzähigkeit.

Es existieren zahlreiche Vorschläge, die Zähigkeit thermoplastischer Polyester durch Zumischen oder Einkondensieren anderer Polymerer, insbesondere solcher auf Basis modifizieter Elastomerer und Polyolefine, anzuheben (DE-OS 16 94 173, 19 28 369, DE-AS 19 61 226, 19 62 855, DE-OS 22 48 242, 23 10 034, 23 57 406, 23 64 318, US 3 236 914, 3 723 574). Den vorgeschlagenen Maßnahmen haftet jedoch der Nachteil an, daß die Zähigkeitsverbesserung mit einer wesentlichen Verschlechterung anderer, z. B. der obengenannten, Eigenschaften einhergeht. Außerdem wird auch die mehraxiale Schlagzähigkeit nicht im gewünschten Maße erreicht.

Überraschenderweise wurde nun gefunden, daß sich die geschilderten Nachteile dadurch beheben lassen, daß man ganz bestimmte ABS-Pfropfpolymerisate, nämlich solche mit einem relativ hohen Gehalt an Pfropfgrundlage und einer eng definierten Teilchengröße, auswählt.

Gegenstand der Erfindung sind Mischungen aus

A. 65-99, vorzugsweise 70-98, insbesondere 75-97, Gew.-% Polyalkylenterephthalat, das wiederum aus

a) 1-100, vorzugsweise 10-80, insbesondere 30-60, Gew.-% Polyethylenterephthalat und

b) 99-0, vorzugsweise 90-20, insbesondere 70-40, Gew.-% Polybutylenterephthalat besteht, und

B. 1-35, vorzugsweise 2-30, insbesondere 3-25, Gew.-%, ABS-Pfropfpolymerisat, wobei sich die Prozentangaben zu A und B auf die Summe A + B und die prozentangaben zu a und b auf A beziehen und das Pfropfpolymerisat B durch Pfropfreaktion von

I. 10-40, vorzugsweise 10-35, insbesondere 15-25, Gew.-%, bezogen auf B, eines Gemisches aus

a) 10-35, vorzugsweise 20-35, Gew.-%, bezogen auf die Summe a + b, Acrylnitril und

b) 65-90, vorzugsweise 65-80, Gew.-%, bezogen auf die Summe a + b, Styrol auf

II. 60-90, vrozugsweise 65-90, insbesondere 75-85, Gew.-%, bezogen auf B, eines vernetzten Butadien-Polymerisats mit mindestens 70 Gew.-%, bezogen auf II, Butadienresten als Pfropfgrundlage erhältlich ist,

dadurch gekennzeichnet, daß der Gelanteil der Pfropfgrundlage II %z 70, vorzugsweise $\geqslant$ 80, % (in Toluol gemessen), der Pfropfgrad G 0,15-0,55 und der mittlere Teilchendurchmesser $d_{50}$ des ABS-Pfropfpolymerisats B 0,2-0,6, vorzugsweise 0,3-0,5, insbesondere ca. 0,4 $\mu$m betragen.

Die Polyalkylenterephthalate A enthalten mindestens 90 Mol-%, bezogen auf die Dicarbonsäurekomponente, Terephthalsäurereste und mindestens 90 Mol-%, bezogen auf die Diolkomponente, Ethylenglykol- und/oder Butandiol-1,4-reste.

Die Polyalkylenterephthalate A können neben Terephthalsäureestern bis zu 10 Mol-% Reste anderer aromatischer, aliphatischer oder cycloaliphatischer Dicarbonsäuren, z. B. Bernsteinsäure-, Adipinsäure-, Isophthalsäurereste, enthalten ; sie können neben Ethylenglykol- und Butandiolresten bis zu 10 Mol-% Reste eines anderen Diols enthalten, wobei dieses andere Diol unter die Formel

$$HO—C_nH_{2n}—OH$$

worin n eine ganze Zahl von 2 bis 10 bedeutet, fallen kann. Es können insbesondere auch bis zu 10 Mol-% alkylsubstituierter Diole, wie Neopentylgklykol, 2,2,4-Trimethylhexandiol-1,6 2-Ethyl-propandiol-1,3 2,2,4-Trimethylpentandiol-1,3 2-Methyl-Pentandiol-2,4, 3-Methylpentandiol-2,4 2-Ethylhexandiol-1,3 eingebaut werden (DE-OS 24 07 674, 24 07 776, 27 15 932).

Die Polyalkylenterephthalate A können auch durch verzweigend wirkende Verbindungen, wie Polycarbonsäuren bzw. Polyole, verzweigt sein (DE-AS 19 00 270).

Die als Komponente A verwendeten Polyethylenterephthalate besitzen im allgemeinen ine Intrinsic-Viskosität von 0,5 bis 1,5 dl/g, vorzugsweise 0,6 bis 1,3 dl/g, insbesondere 0,7 bis 1,2 dl/g, und die als Komponente A verwendeten Polybutylenterephthalate besitzen im allgemeinen eine Intrinsic-Viskosität von 0,7 bis 1,5 dl/g, vorzugsweise 0,8 bis 1,3 dl/g, insbesondere 0,8 bis 1,05 dl/g, jeweils gemessen in Phenol/o-Dichlorbenzol bei 25 °C (1 : 1 Gewichtsteile).

Die Pfropfgrundlage II kann neben Butadienresten bis zu 30 Gew.-%, bezogen auf II, Reste anderer $\alpha,\beta$-ethylenisch ungesättigter Monomerer, wie z. B. Styrol, Acrylnitril, Ester der Acryl- oder Methacrylsäure mit 1-4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäß unter Pfropfpolymerisaten auch solche Produkte verstanden, die neben den eigentlichen Pfropfpolymeren auch Homo- und Copolymerisate der eingesetzten Pfropfmonomeren I enthalten. Der Pfropfgrad G bezeichnet das Gewichtsverhältnis von aufgepfropftem

Styrol/Acrylnitril : Pfropfgrundlage und ist dimensionslos.

Der mittlere Teilchendruchmesser $d_{50}$ ist der Durchmesser, oberhalb und unterhalb dessen jeweils 50 Gew.-% der Teilchen liegen.

Der mittlere Teilchendruchmesser kann mittels Ultrazentrifugen-Messugen (W. Scholtan, H. Lange, Kolloid. Z. und Z. Polymere *250* (1972), 782-796) oder mittels Elektronenmikroskopie und anschließende Teilchenauszählung (G. Kämpf, H. Schuster, Angew. Makromolekulare Chemie *14* (1970), 111-129) bestimmt werden.

Die Pfropfpolymerisate B können nach an sich bekannten Methode, z. B. durch Emulsionspolymerisation oder Latex-Suspensionsverfahren, mit Hilfe von Radikal-bildenden Polymerisationsinitiatoren in einem Polybutadien- bzw. Butadien-Copolymerisat-Latex hergestellt werden.

Die Verfahren zur Herstellung von ABS-Pfropfpolymerisaten sind bekannt.

Die Herstellung der erfindungsgemäßen Mischung kann in den üblichen Mischaggregaten wie Walzen, Kneter, Ein- und Mehrwellenextruder erfolgen. Besonders geeignet sind Doppelwellenextruder und Kneter.

Die Mischungen können auf den genannten Mischaggregaten hergestellt werden, indem die beiden Komponenten A und B gemeinsam aufgeschmolzen und homogenisiert werden oder indem das Pfropfpolymerisat B in die Schmelze des Polyalkylenterephthalats A eingearbeitet wird.

Die Temperatur bei der Herstellung der Mischungen sollte mindestens 10 °C oberhalb der Mischschmelzpunkte des Polyalkylenterephthalats A und unterhalb 300 °C, vorzugsweise zwischen 245 und 280 °C liegen, wobei die niedere Temperatur für PBT-reiche und die höhere Temperatur für PETreiche Mischungen gilt.

Die erfindungsgemäßen Mischungen können übliche Additive, wie Gleit- und Entformungsmittel, Nukleiermittel, Stabilisatoren, Füll- und Verstärkungsstoffe, Flammschutzmittel sowie Farbstoffe, enthalten. Die Zusatzstoffe werden vorzugsweise bei der Compoundierung in reiner Form oder als Konzentrate zugesetzt.

Die erfindungsgemäßen Mischungen können bis zu 60, vorzugsweise 5-50, insbesondere 10-40 Gew.-%, bezogen auf die Summe aus Mischungen und Füll- bzw. Verstärkungsstoff, eines Füllstoffes und/oder Verstärkungsstoffes enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Mischungen enthalten Flammschutzmittel in einer Konzentration von im allgemeinen weniger als 30 Gew.-%, bezogen auf die Formmasse.

Es kommen alle bekannten Flammschutzmittel in Frage, wie z. B. Polyhalogendiphenyl, Polyhalogendiphenylether, Polyhalogenphthalsäure und ihre Derivate und Polyhalogenpolycarbonate, wobei die entsprechenden Bromverbindungen besonders wirksam sind. Außerdem enthalten sie in der Regel einen Synergisten, wie z. B. Antimontrioxid.

Die erfindungsgemäßen Mischungen zeichnen sich bei niedrigen Gehalten an Pfropfpolymerisat B durch eine erhebliche Verbesserung der mehraxialen Schlagzähigkeit, insbesondere bei niedrigen Temperaturen bis zu − 40 °C, aus. Überraschend für die Mischungen ist auch die hohe Fließnahtfestigkeit. Darüber hinaus zeichnen sich die Mischungen durch eine hohe Wärmeformbeständigkeit aus.

Entsprechend dem Eigenschaftsprofil können die erfindungsgemäßen Mischungen daher überall im Spritzguß- und Extrusionssektor dort eingesetzt werden, wo hohe Wärmeformbeständigkeit und hohe Zähigkeit, verbunden mit hoher Lösungsmittelbeständigkeit, gefordert werden, z. B. bei temperaturbelasteten Haushaltsgeräten, Karosserieteilen, Stoßfängern, Büromaschinen-Bauteilen, Lampenhaltern.

Die in den nachfolgenden Beispielen genannten Teile sind Gewichtsteile.

## Beispiele 1-13

Auf einer kontinuierlich arbeitenden Zweiwellenmaschine der Fa. Werner & Pfleiderer (Typ ZSK 32) wurde ein Polyethylenterephthalat mit einer Intrinsic-Viskosität von 0,75 dl/g bzw. ein Polybutylenterephthalat mit einer Intrinsic-Viskosität von 0,95 dl/g aufgeschmolzen. Durch einen zweiten Einfüllstutzen wurde das ABS-Pfropfpolymerisat in die Polyalkylenterephthalat-Schmelze eindosieret. Stickstoffbeschleierung ist zweckmäßig. Das Pfropfpolymerisat wurde aufgeschmolzen und im Polyalkylenterephthalat homogen verteilt. Es kann vorteilhaft sein, die Schmelze vor dem Austritt aus der Düse zu entgasen. Die Zylindertemperaturen wurden so eingestellt, daß eine Massetemperatur von 265-270 °C gewährleistet war. Der Schmelzstrang der Mischung aus Polyalkylenterephthalat und Pfropfpolymerisat wurde in Wasser abgekühlt, granuliert und getrocknet.

Zur Herstellung des Pfropfpolymerisats wurden nach dem Verfahren der Emulsionspolymerisation gemäß Angaben von DE-AS 12 47 665 UND DE-AS 12 69 360 in der Tabelle I angegebenen Anteile an Acrylnitril und Styrol auf 65-80 Teile eines grobteiligen, vernetzten Polybutadien-Kautschuks mit einem mittleren Teilchendurchmesser ($d_{50}$) der in Latexform vorliegenden Polybutadienpfropfgrundlage von 0,4 µm und einem Gelanteil von 85 % aufgepfropft.

Vom Granulat wurden auf einer üblichen Spritzgußmaschine bei einer Massetemperatur von 265-270 °C Normkleinstäbe (nach DIN 53 453) und Platten von 3 × 60 × 60 mm verspritzt.

Geprüft wurde die Schlagzähigkeit und Kerbschlagzähigkeit (nach DIN 53 453), Kugeldruckhärte

(nach DIN 53 456), Wärmeformbeständigkeit nach Vicat (nach DIN 53 460) sowie die mehraxiale Schlagzähigkeit im EKWA-Test (DIN 53 443, Blatt 2, Durchschlagung einer Platte von 3 × 60 × 60 mm mit einem Gewicht von 35 kg mit einem Durchstoßdorn mit kugelförmiger Spitze, Durchmesser 20 mm, bei einer Fallhöhe von 1 m). Die Fließnahtfestigkeit wurde im Zugversuch (nach DIN 53 455) an zweiseitig angespritzten Zugstäben geprüft.

Tabelle I : Pfropfpolymerisat B

| Typ | Anteil Polybutadien II in Pfropfpolymerisat B [%] | Anteil in Pfropfhülle I | | Pfropfgrad G |
|---|---|---|---|---|
| | | Acrylnitril [%] | Styrol [%] | |
| K | 65 | 28 | 72 | 0,35 |
| L | 80 | 28 | 72 | 0,20 |
| M | 80 | 12 | 88 | 0,21 |

(Siehe Tabelle II Seite 5f.)

Tabelle II

| Beispiel | Pfropfpolymerisat B Anteil in Mischung Typ | [%] | Polyester A Anteil A in Mischung PET [%] | PBT [%] | Formtemperatur [°C] | Kerbschlagzähigkeit kJ/m² | Kugeldruckhärte MPa | EKWA-Test Zahl der Zähbrüche % |
|---|---|---|---|---|---|---|---|---|
| 1 | K | 4 | 48 | 48 | 80 | 5,0 | 125 | 100 |
| 2 | K | 10 | 45 | 45 | 80 | 6,0 | 121 | 100 |
| 3 | K | 20 | 40 | 40 | 80 | 9,1 | 101 | 100 |
| 4 | K | 30 | 35 | 35 | 80 | 17,1 | 85 | 100 |
| 5 | L | 10 | 45 | 45 | 80 | 6,5 | 107 | 100 |
| 6 | L | 20 | 40 | 40 | 80 | 35 | 91 | 100 |
| 7 | L | 30 | 35 | 35 | 80 | 43 | 72 | 100 |
| 8 | M | 10 | 45 | 45 | 80 | 7,1 | 112 | 100 |
| 9 | L | 20 | 64 | 16 | 140 | 31 | 120 | 100 |
| 10 | L | 20 | 24 | 56 | 80 | 33 | 90 | 100 |
| 11 | L | 20 | 80 | 0 | 140 | 28 | 121 | 100 |
| 12 | - | - | 50 | 50 | 80 | 2,8 | 128 | 10 |
| 13 | - | - | 100 | 0 | 140 | 2,6 | 152 | 0 |

Der Schlagzähigkeitstest ergab für die Proben aller Beispiele das Ergebnis « nicht gebrochen ».
Abkürzung : EKWA = Elektronische Kraft/Weg-Aufnahme
Die Fließnahtfestigkeit * für alle Proben lag bei 100 %
* (Reißfestigkeit mit Fließnaht. 100)/Reißfestigkeit ohne Fließnaht

Beispiele 14-19

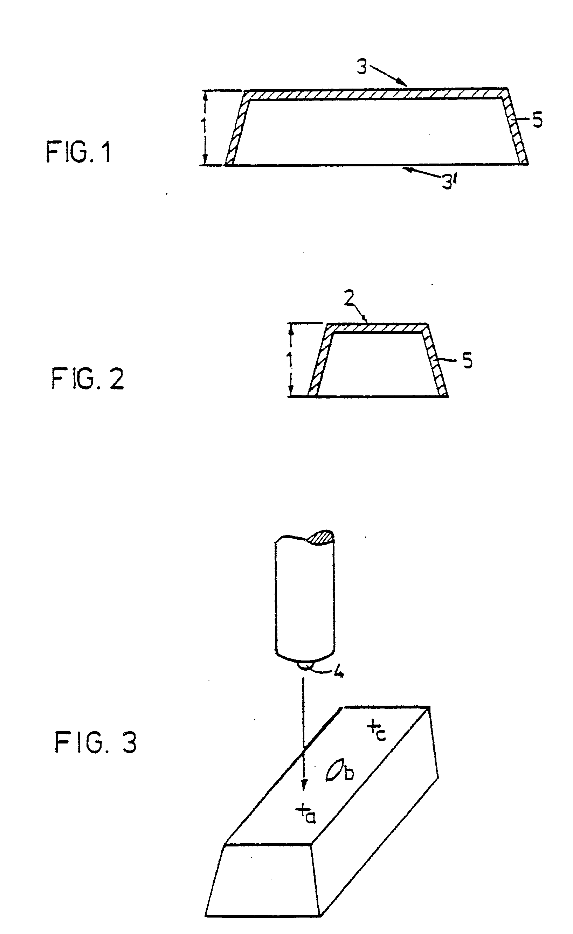

Analog den Versuchen 1-13 wird ABS-Pfropfpolymerisat mit geschmolzenem Polyalkylenterephthalat auf einer Schnecke gemischt. Anschließend werden in diese Schmelze Glasfasern eindosiert und homogen verteilt. Vom Granulat wurden Prüfkörper wie für Beispiele 1-13 hergestellt. Ein zuverlässiges Bild der Zähigkeit der verstärkten Mischungen unter Schlagbeanspruchung liefert der Stoß- und Fallbolzenversuch nach DIN 53 443, wie es in Figur 3 dargestellt ist. In dieser Figur hat die Kugel 4 einen Radius von 25 mm

a) bedeutet die Auftreffstelle der Kugel,
b) den Stangenanguß (Ø ca. 4 mm) in der Mitte der Bodenfläche und
c) eine zu a) parallele Prüfstelle.

Voraussetzung ist allerdings, daß die Prüfkörper einen möglichst geringen Orientierungsgrad aufweisen, wie beispielsweise das in den Figuren 1 und 2 dargestellte Testkästchen, das eine Höhe 1 von 40 mm, eine Breite 2 von 46,7 mm und eine Länge 3 von 106,7 mm bzw. 3' von 120 mm und eine Wanddicke 5 von 1,5 mm aufweist.

(Siehe Tabelle III Seite 7 f.)

Tabelle III

| Beispiele | Zusammensetzung der Mischungen /Gew.-Teile/ | | | | Formtemperatur /°C/ | Schlagzähigkeit kJ/m² | Kerbschlagzähigkeit kJ/m² | Verformungsarbeit bei EKWA (Kästchen) /Joule/ |
|---|---|---|---|---|---|---|---|---|
| | Pfropfpolymerisat B (Typ L) | Polyester A PET | Polyester A PBT | Glasfaser (Ø 10 µm) | | | | |
| 14 | 19 | 35,5 | 35,5 | 10 | 80 | 38 | 13 | 7,1 |
| 15 | 17 | 31,5 | 31,5 | 20 | 80 | 42 | 14 | 6,2 |
| 16 | 15 | 27,5 | 27,5 | 30 | 80 | 47 | angebrochen | 2,9 |
| 17 | 13 | 23,5 | 23,5 | 40 | 80 | 48 | angebrochen | 1,8 |
| 18 | 15 | 55 | 0 | 30 | 140 | 44 | angebrochen | 2,5 |
| 19 | 0 | 70 | 0 | 30 | 140 | 32 | 7 | 0,5 |

**Patentansprüche**

1. Mischungen aus

A. 65-99 Gew.-% Polyalkylenterephthalat, das wiederum aus

a) 1-100, vorzugsweise 10-80, isbesondere 30-60, Gew.-% Polyethylenterephthalat und

b) 99-0, vorzugsweise 90-20, insbesondere 70-40, Gew.-% Polybutylenterephthalat besteht, und

B. 1-35 Gew.-% ABS-Pfropfpolymerisat, wobei sich die Prozentangaben zu A und B auf die Summe A + B und die Prozentangaben zu a und b auf A beziehen und das Pfropfpolymerisat B durch Pfropfreaktion von

I. 10-40 Gew.-%, bezogen auf B, eines Gemisches aus

a) 10-35 Gew.-%, bezogen auf die Summe a + b, Acrylnitril,

b) 65-90 Gew.-%, bezogen auf die Summe a + b, Styrol auf

II. 60-90 Gew.-%, bezogen auf B, eines vernetzten Butadien-Polymerisats mit mindestens 70 Gew.-%, bezogen auf II, Butadienresten als Pfropfgrundlage erhältlich ist,

dadurch gekennzeichnet, daß der Gelanteil der Pfropfgrundlage II $\geq$ 70 % (in Toluol gemessen), der Pfropfgrad G 0,15-0,55 und der mittlere Teilchendurchmesser $d_{50}$ des ABS-Pfropfpolymerisats B 0,2-0.6 µm betragen.

2. Mischungen nach Anspruch 1, dadurch gekennzeichnet, daß die Mischungen aus 70-98 Gew.-% A und 2-30 Gew.-% B bestehen.

3. Mischungen nach Ansprüchen 1 und 2, dadurch gekennzeichnet, daß die Mischungen aus 75-97 Gew.-% A und 3-25 Gew.-% B bestehen.

4. Mischungen nach Ansprüchen 1-3, dadurch gekennzeichnet, daß das Pfropfpolymerisat B durch Pfropfreaktion von 10-35 Gew.-% I auf 65-90 Gew.-% II erhältlich ist.

5. Mischungen nach Ansprüchen 1-4, dadurch gekennzeichnet, daß das Pfropfpolymerisat B durch pfropfreaktion von 15-25 Gew.-% I auf 75-85 Gew.-% II erhältlich ist.

6. Mischungen nach Ansprüchen 1-5, dadurch gekennzeichnet, daß die Pfropfmonomeren I zu 20-35 Gew.-% aus Acrynitril und zu 65-80 Gew.-% aus Styrol bestehen.

7. Mischungen nach Ansprüchen 1-6, dadurch gekennzeichnet, daß der Gelanteil der Pfropfgrundlage II $\geq$ 80 % (in Toluol gemessen) beträgt.

8. Mischungen nach Ansprüchen 1-7, dadurch gekennzeichnet, daß der mittlere Teilchendurchmesser $d_{50}$ des Pfropfpolymerisats B 0,3-0,5 µm beträgt.

9. Mischungen nach Ansprüchen 1-8, dadurch gekennzeichnet, daß der mittlere Teilchendurchmesser $d_{50}$ des Pfropfpolymerisats B ca. 0,4 µm beträgt.

10. Mischungen nach Ansprüchen 1-9, dadurch gekennzeichnet, daß der Anteil an Polyethylenterephthalat in A 10-80 Gew.-% beträgt.

11. Mischungen nach Ansprüchen 1-9, dadurch gekennzeichnet, daß der Anteil Polyethylenterephthalat in A 30-60 Gew.-% beträgt.

12. Mischungen nach Ansprüchen 1-11, dadurch gekennzeichnet, daß die Mischungen bis zu 60 Gew.-% Glasfasern enthalten.

**Claims**

1. Mixtures of

A. 65-99 % by weight of polyalkylene terephthalate, wich in turn consists of

a) 1-100, preferably 10-80, in particular 30-60 % by weight of polyethylene terephthalate and

b) 99-0, preferably 90-20, in particular 70-40 % by weight of polybutylene terephthalate, and

B. 1-35 % by weight of ABS graft polymer, wherein the percentages under A and B relate to the sum of A + B and the percentages under a and b relate to A and the graft polymer B is obtainable by a grafting reaction of

I. 10-40 % by weight, based on B, of a mixture of

a) 10-35 % by weight, based on the sum a + b, of acrylonitrile and

b) 65-90 % by weight, based on the sum of a + b, of styrene on

II. 60-90 % by weight, based on B, of a cross-linked butadiene polymer containing at least 70 % by weight, based on II of butadiene radicals, as the graft base,

characterized in that the gel content of the graft base II is $\geq$ 70 % (measured in tuluene), the degree of grafting G is 0.15-0.55 and the average particle diameter $d_{50}$ of the ABS graft polymer B is 0.2-0.6 µm.

2. Mixtures according to Claim 1, characterized in that the mixtures consist of 70-98 % by weight of A and 2-30 % by weight of B.

3. Mixtures according to Claims 1 and 2, characterized in that the mixtures consist of 75-97 % by weight of A and 3-25 % by weight of B.

4. Mixtures according to Claims 1-3, characterized in that the graft polymer B is obtainable by a grafting reaction of 10-35 % by weight of I on 65-90 % by weight of II.

5. Mixtures according to Claims 1-4, characterized in that the graft polymer B is obtainable by a grafting reaction of 15-25 % by weight of I on 75-85 % by weight of II.

6. Mixtures according to Claims 1-5, characterized in that the graft monomers I consist, to an extent of 20-35 % by weight, of acrylonitrile and, to an extent of 65-80 % by weight, of styrene.

7. Mixtures according to Claims 1-6, characterized in that the gel content of the graft base II is ⩾ 80 % (measured in toluene).

8. Mixtures according to Claims 1-7, characterized in that the average particle size $d_{50}$ of the graft polymer B is 0.3-0.5 μm.

9. Mixtures according to Claims 1-8, characterized in that the average particle size $d_{50}$ of the graft polymer B is about 0.4 μm.

10. Mixture according to Claims 1-9, characterized in that the content of polyethylene terephthalate in A is 10-80 % by weight.

11. Mixtures according to Claims 1-9, characterized in that the content of polyethylene terephthalate in A is 30-60 % by weight.

12. Mixtures according to Claims 1-11, characterized in that the mixtures contain up to 60 % by weight of glass fibres.

**Revendications**

1. Mélanges de

A. 65 à 99 % en poids d'un téréphtalate de polyalkylène qui consiste en

a) 1 à 100, de préférence 10 à 80, plus particulièrement 30 à 60 % en poids de téréphtalate de polyéthylène, et

b) 99 à 0, de préférence 90 à 20, plus particulièrement 70 à 40 % en poids de téréphtalate de polybutylène, et

B. 1 à 35 % en poids d'un polymère greffé ABS, les pourcentages donnés pour A et B se rapportant à la somme A + B et les pourcentages indiqués pour a) et b) se rapportant à A, le polymère greffé B pouvant être obtenu par une réaction de greffage de

I. 10 à 40 % en poids, par rapport à B, d'un mélange de

a) 10 à 35 % en poids, par rapport à la somme a) + b), d'acrylonitrile,

b) 65 à 90 % en poids, par rapport à la somme a) + b), de styrène, sur

II. 60 à 90 % en poids, par rapport à B, d'un polymère réticulé du butadiène à au moins 70 % en poids, par rapport à II, de restes de butadiène, en tant que support de greffage, caractérisés en ce que la proportion de gel du support de greffage II est égale ou inférieure à 70 % (mesurée dans le toluène), le degré de greffage G est de 0,15 à 0,55 et le diamètre de particule moyen $d_{50}$ du polymère greffé ABS B est de 0,2 à 0,6 μm.

2. Mélanges selon la revendication 1, caractérisés en ce qu'ils consistent en 70 à 98 % en poids de A et 2 à 30 % en poids de B.

3. Mélanges selon les revendications 1 et 2, caractérisés en ce qu'ils consistent en 75 à 97 % en poids de A et 3 à 25 % en poids de B.

4. Mélanges selon les revendications 1 à 3, caractérisés en ce que le polymère greffé B peut être obtenu par une réaction de greffage de 10 à 35 % en poids de I sur 65 à 90 % en poids de II.

5. Mélanges selon les revendications 1 à 4, caractérisés en ce que le polymère greffé B peut être obtenu par une réaction de greffage de 15 à 25 % en poids de I sur 75 à 85 % en poids de II.

6. Mélanges selon les revendications 1 à 5, caractérisés en ce que les monomères de greffage consistent pour 20 à 35 % en poids en acrylonitrile et pour 65 à 80 % en poids en styrène.

7. Mélanges selon les revendications 1 à 6, caractérisés en ce que la proportion de gel du support de greffage II est égale ou inférieure à 80 % (mesurée dans le toluène).

8. Mélanges selon les revendications 1 à 7, caractérisés en ce que le diamètre de particule moyen $d_{50}$ du polymère greffé B est de 0,3 à 0,5 μm.

9. Mélanges selon les revendications 1 à 8, caractérisés en ce que le diamètre de particule moyen $d_{50}$ du polymère greffé B est d'environ 0,4 μm.

10. Mélanges selon les revendications 1 à 9, caractérisés en ce que proportion du téréphtalate de polyéthylène dans A est de 10 à 80 % en poids.

11. Mélanges selon les revendications 1 à 9, caractérisés en ce que la proportion du téréphtalate de polyéthylène dans A est de 30 à 60 % en poids.

12. Mélanges selon les revendications 1 à 11, caractérisés en ce qu'ils contiennent jusqu'à 60 % en poids de fibres de verre.

FIG. 1

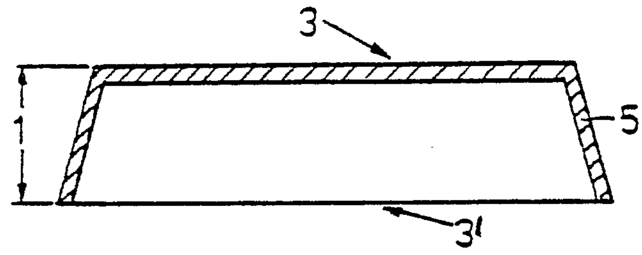


FIG. 2

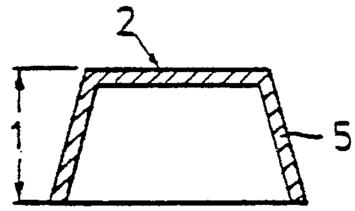


FIG. 3